(19) Europäisches Patentamt
European Patent Office
Office européen des brevets

(11) **EP 3 293 355 A1**

(12) **EUROPEAN PATENT APPLICATION**

(43) Date of publication:
**14.03.2018 Bulletin 2018/11**

(51) Int Cl.:
***F01D 5/14*** $^{(2006.01)}$     ***F01D 9/04*** $^{(2006.01)}$

(21) Application number: **17186348.3**

(22) Date of filing: **16.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.09.2016 GB 201615494**

(71) Applicant: **Rolls-Royce plc London SW1E 6AT (GB)**

(72) Inventors:
- **Tooze, Sarah**
  **Derby, Derbyshire DE24 8BJ (GB)**
- **Hall, Cesare**
  **Derby, Derbyshire DE24 8BJ (GB)**
- **Gunn, Ewan**
  **Derby, Derbyshire DE24 8BJ (GB)**

(74) Representative: **Rolls-Royce plc Intellectual Property Dept SinA-48 PO Box 31 Derby DE24 8BJ (GB)**

(54) **ROTOR STAGE**

(57) A boundary layer Ingesting (BLI) fan system operates with a highly non-uniform flow field that propagates through the fan stage. The fan stage suffers from hub separations, increased wake thicknesses and casing losses. These loss sources can be reduced or eliminated by varying the inlet metal angles and/or chordal lengths of the downstream fan stators. Greater improvement can further be made by non-axisymmetrically leaning the stators

FIG. 10

EP 3 293 355 A1

## Description

The disclosure relates to a rotor stage comprising a rotor and a downstream stator and particularly a fan stage in a boundary layer ingestion architecture.

Conventional state of the art propulsion systems for large civil aircraft typically include one or more gas turbine engines placed under the wings of the aircraft. However, some studies have indicated that so-called distributed propulsion, which involves having numerous smaller propulsion units preferentially arranged around an aircraft, may provide some significant benefits in terms of noise reduction and fuel efficiency when compared with the current state of the art propulsive arrangements.

One known option for distributed propulsion is to provide numerous propulsive units which are located so as to capture and accelerate slow speed boundary layer air which has formed against the surface of the aircraft. This can lead to a significant reduction in overall fuel burn with the maximum benefit of boundary layer ingestion being achieved when the low speed flow is not mixed with the freestream flow, but is accelerated to homogeneous conditions by the propulsion system. These are boundary layer ingesting fans.

When implementing boundary layer ingestion, the inlet of the fan intake duct is located flush to a surface of the aircraft so that the low speed boundary layer that has developed can be captured and energized by the propulsion system. These designs tend to have two flow streams within them, a high speed (or freestreaming) flow along the length of the duct and a very low speed flow proximate to the wall. This leads to non-uniform radial and circumferential velocity profiles and a resulting loss of performance and aeromechanical instabilities.

In a paper presented by E.J Gunn and C.A Hall in the Proceedings of ASME Turbo Expo 2014 between June 16-20th it is noted that these non-uniform velocity profiles can propagate through the fan such that the downstream stator has an inlet flow field that is distorted throughout the annulus. Thus every stator blade operates at an off-design condition.

It is an object of the present invention to seek to address this and other problems.

According to a first aspect there is provided a boundary layer ingestion (BLI) rotor stage having an array of upstream rotors and an array of downstream stators arranged around an axis, the rotor stage configured to receive a non-axisymmetric flow field, wherein the array of downstream stators has a plurality of aerofoils each having a suction surface, a pressure surface, a leading edge, a trailing edge, a chordal length, the leading edge presenting an inlet metal angle to the non-axisymmetric flow, wherein the array of stators is non-axisymmetric and the plurality of aerofoils have varying inlet metal angles and/or chordal lengths.

The non-axisymmetric flow field presented to the array of stators may have a whirl angle that varies around the annulus. The inlet metal angle of each of the plurality of stators may increase as the whirl angle increases. The stator metal angle may vary between 25° and 60° but preferably between 35° and 44°.

The inlet metal angles of the stators that are located greater than +/-90° around the annulus from the maximum whirl angle may be the same. This reduces the number of different aerofoils that may be required around the annulus

The chordal length of each stator may vary by a scaling factor of between 0.6 and 1.4 but more preferably between 0.9 and 1.2 from an average chordal length of all the stators.

The non-axisymmetric flow field presented to the array of stators has a whirl angle that varies around the annulus and wherein the chordal length of the stators that are located greater than +/-90° around the annulus from the maximum whirl angle are the same.

Each of the stators may lean, with the pressure surface of the aerofoil towards the axis.

The angle of lean within the array of stators may be non-axisymmetric. The maximum angle of lean may be up to between 20° and 12° greater than the mode, or most common, angle of lean within the array. The lean may be straight or compound.

The non-axisymmetric flow field may have at least one distorted region affected by boundary layer ingestion and at least one core stream region. The core stream region is substantially unaffected by the boundary layer ingestion.

The BLI rotor stage may be located within a duct embedded or partially embedded within an aircraft fuselage. The duct upstream of the rotor stage may be convoluted with multiple points of inflection.

There may also be provided a boundary layer ingestion (BLI) rotor stage within a duct presenting an inlet BLI profile to an array of upstream rotors, the rotor stage configured to receive a non-axisymmetric flow field and having an array of downstream stators arranged around an axis wherein the array of downstream stators has a plurality of aerofoils each having a suction surface, a pressure surface, a leading edge, a trailing edge, a chordal length, the leading edge presenting an inlet metal angle to the non-axisymmetric flow, wherein the array of stators is non-axisymmetric and the plurality of aerofoils have varying inlet metal angles and/or chordal lengths.

There may also be provided a boundary layer Ingesting (BLI) fan system operating within a non-uniform flow field, wherein the non-uniform flow field propagates through a fan of the fan stage to an array of stators downstream of the fan; wherein the array of downstream stators has a plurality of aerofoils each having a suction surface, a pressure surface, a leading edge, a trailing edge, a chordal length, the leading edge presenting an inlet metal angle to the non-axisymmetric flow, wherein the array of stators is non-axisymmetric and the plurality of aerofoils have varying inlet metal angles and/or chordal lengths.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:

Figure 1 is a front view of an aircraft having a boundary layer ingestion engine;
Figure 2 is a side view of the engine of Figure 1
Figure 3 is a conceptual picture of the flow field development through a BLI fan stage
Figure 4 depicts the flow field at the exit of a stator
Figure 5 shows a nominal stator aerofoil cross-section
Figure 6 shows the variations in whirl, inlet metal angles and scaling factors of a non-axisymmetric stator array
Figure 7 depicts the flow field at the exit of a non-axisymmetric stator following 2D redesign
Figure 8 shows variation of blade stacking axis for axisymmetric and non-axisymmetric redesign
Figure 9 depicts the flow field at the exit of a non-axisymmetric stator following 3D redesign
Figure 10 shows the comparison of overall stator loss coefficients for axisymmetric and 2D non-axisymmetric and 3D non-axisymmetric redesign.

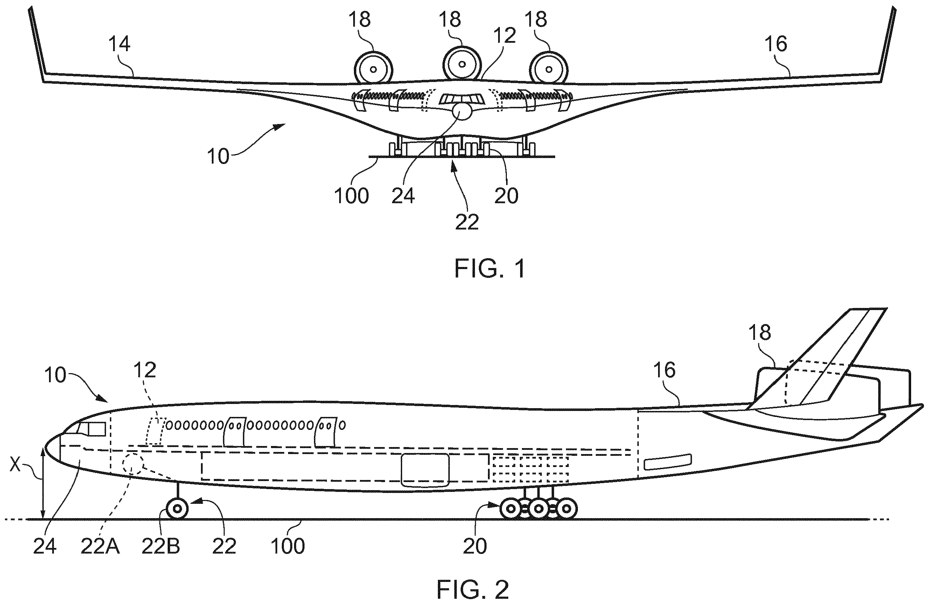

Referring to FIGS. 1 and 2, there is shown an aircraft 10, generally known as a blended wing body aircraft. Although, as suggested by the name of the aircraft the body and the wings of the aircraft 10 are merged to form a single structure, it can be seen generally that the aircraft 10 comprises the following features, namely a body 12, wings 14, 16 and engines 18. The aircraft also includes landing arrangement in the form of a main landing gear 20 arranged just rearward of the centre of the body 12 and an aircraft support assembly in the form of a front landing gear 22, arranged in the vicinity of the nose 24 of the body 12. The landing gear is retracted from a deployed position 22b to a retracted position 22a following take-off from the ground 100.

The engines are integrated into the fuselage so their intakes capture air from the airframe boundary layer. The air is re-energised within the fan stage thereby reducing the wasted kinetic energy in the aircraft's wake. Engines of this type are known as Boundary Layer Ingesting (BLI) engines. There are many proposed BLI configurations and thus different possible inlet flow fields. Exemplary aircraft configurations are the blended wing arrangement exemplified in Figure 1 and 2 aircraft configurations where the propulsion is distributed over many smaller fans powered electrically or mechanically with power from a battery or separate main gas turbine engines. In each case the fans ingest a radially and circumferentially non-uniform mass flow distribution.

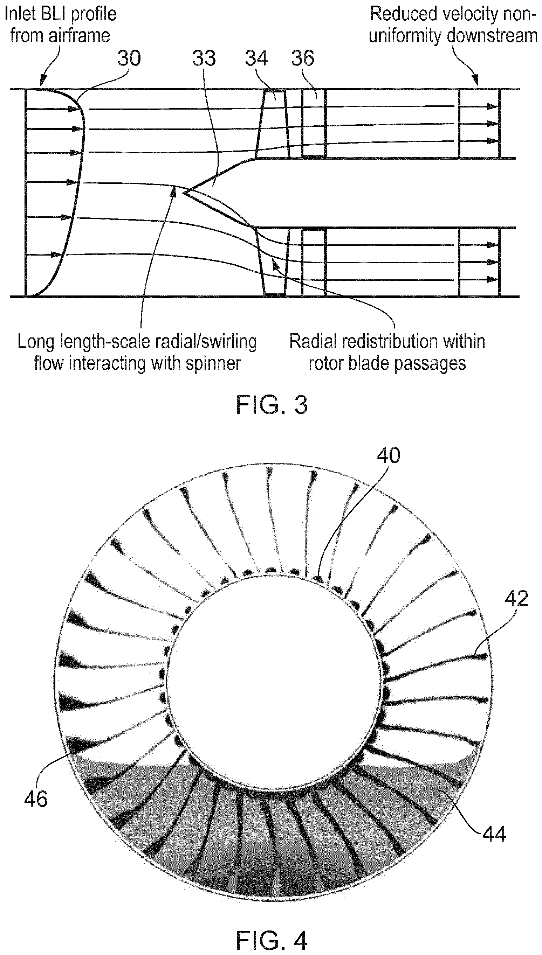

A BLI fan must run continuously with high levels of inlet flow non-uniformity, or distortion and the inlet distortion has been found to reduce compressor pressure rise, efficiency, stability and to increase blade forcing. As the fan operates with a non-axisymmetric inlet stagnation pressure field the flow field at the rotor exit is also non-axisymmetric. The Mach number and flow angle distributions around the circumference and across the radial span of the annulus will be non-uniform at the rotor OGV inlet. Figure 3 shows a conceptual picture of the flow field development through a BLI fan stage. The inlet BLI profile 30 from the airframe is non-uniform and the mass is continually redistributed through the machine because the rotor imparts a non-axisymmetric work distribution in response to the distorted inlet flow. The radial/swirling flow interacts with the spinner 32 and the rotor stage 34 to provide a radial distribution within the rotor blade passages. The stators 36 straighten the swirling flow from the rotor. Compared with design conditions, the flow field with BLI is highly three-dimensional and has high coupling between the spinner, rotor and stator that has a direct impact on loss generation.

The swirl and radial angle variations presented to the rotor 34 inlet extend around the whole annulus and cause loss due to the distribution of incidence and loading. The flow emerging from at the rotor exit also has non-uniform swirl and radial angle, which leads to increased losses in the stator row through variations in profile loss and end-wall corner separations.

Figure 4 depicts the flow-field at the exit from the stator 36 of a BLI fan having a non axi-symmetric inlet flow field with an upstream distorted region 44 depicted in grey. At the exit from the stator, or outlet guide vane (OGV), growing hub separations 40 are visible in the region behind the distorted sector and circumferential variations in the wakes 42 are visible around the annulus. Increased stator hub and mid-span losses were also apparent even though the inlet distortion was confined to the casing region. The casing separations 46 are highest where the rotor leaves the distorted sector. Each separation adds to the efficiency loss of the fan stage.

It has been found that by providing a non-axisymmetric design to the stators both the non-uniformity in the rotor exit static pressure distributions can be improved and the effect of the non-uniformity at the stator inlet can be mitigated leading to an improvement in the performance of a BLI fan. Although the precise design variations required are determined through the application of full-annulus unsteady CFD, the non-axisymmetric design of the stators comprises varying the camber, chord and / or lean of the stators around the circumference of the flow passage.

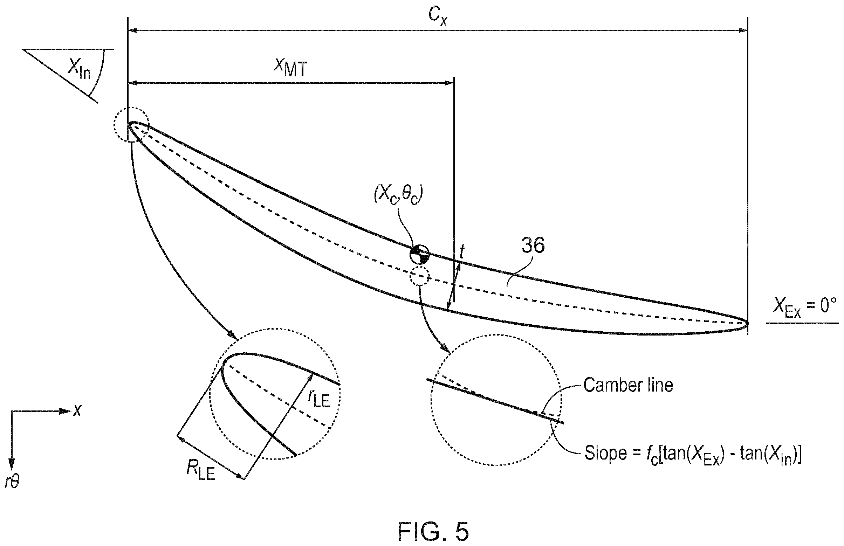

A nominal stator aerofoil 36 cross-section is depicted in Figure 5, where:

| | |
|---|---|
| $\chi_{in}$ | is the inlet angle |
| $c_x$ | is the axial chord |
| $(c_c, \theta_c)$ | is the centroid location |
| $\chi_{ex}$ | is the exit angle |
| $t/c_x$ | is the maximum thickness |
| $x_{mt}/c_x$ | is the maximum thickness location |
| $f_c$ | is the camber fraction at midchord |
| $r_{LE}$ | is the leading edge radius |
| $R_{LE}/r_{LE}$ | is the leading edge ellipse ratio |
| $r_{TE}$ | is the trailing edge radius |
| $R_{TE}/r_{TE}$ | is the trailing edge ellipse ratio |

The main drivers of the stator loss variation have been found to be the leading edge incidence and the Lieblein diffusion factor.

In sectors of the engine where the inlet flow angle is higher than in clean, undistorted flow, the inlet metal angle is increased accordingly. The inlet metal angle is the angle between the tangent to the camber line at the stator leading edge and stator axial direction. These stator blades will also be subject to high diffusion factor values and this is alleviated by decreasing the pitch-to-chord ratio, which may be achieved by increasing the axial chord.

There are parts of the annulus where the stator blades operate at lower inlet flow angle than in clean undistorted flow. In these regions the inlet angle and axial chord can be decreased to avoid negative leading edge incidence and excessive wetted area. This offers the ability to rebalance solidity around the annulus to the areas where it is most needed, offsetting the increased wetted area on the highly loaded blades.

The required adjustment in inlet stator metal angle was derived from the difference between the swirl angle at rotor exit when operating in a region of boundary layer ingestion relative to clean flow. An equation used to align the blade leading edge with the flow by adjusting the inlet metal angle is:

$$\chi_{New} = \chi_{Base} + (i_{BLI} - i_c) = \chi_{Base} + (\alpha_{BLI} - \alpha_c)$$

Near the end-walls the axial velocity is close to zero so the swirl angle is highly sensitive to changes in velocity. This produces large changes of swirl angle at rotor exit. For this reason $\chi_{New}$ in this embodiment was limited to a maximum of 55°, a value which was determined by through CFD analysis.

The variations in axial chord were determined using variations in Lieblein's diffusion factor relative to clean flow where the axial chord was scaled by the measured difference in diffusion factor (DF) between BLI and clean flow.

$$DF = 1 - \frac{V_5}{V_4} + \frac{1}{2} \frac{|V_{\theta 5} - V_{\theta 4}|}{V_4} \frac{s}{c}$$

$$c_{x,New} = c_{x,Base} K \left( DF_{BLI} - DF_C \right)$$

The constant K is adjusted to fix the desired maximum variation in axial chord in order to a) ensure the stator row can fit inside the available axial length and b) to avoid excessive profile loss. For the embodiment described here the constant K was adjusted to allow a maximum 25% variation in axial chord.

The application of non-axisymmetric designs is successful in reducing incidence and diffusion that leads to a reduction in the casing separations and blade profile losses. However there are still observable 3D flow separations and these can be reduced by providing non-axisymmetric variations in blade stacking.

Applying pressure surface lean towards the hub reduces hub loading. The lean may be straight or compound and although straight lean cannot, when compared with compound lean, improve both endwalls simultaneously, it has the advantage of inducing longer length scale changes in the flow field and was found to be more effective in reducing the size of hub separations as well as causing less increase in stator profile loss.

To calculate the required non-asymmetry of the stators the flow-field downstream of the fan rotor is computed using a simulation of the fan system running with the appropriate inlet distortion pattern, such as a non-axisymmetric upstream stagnation pressure field due to boundary layer ingestion.

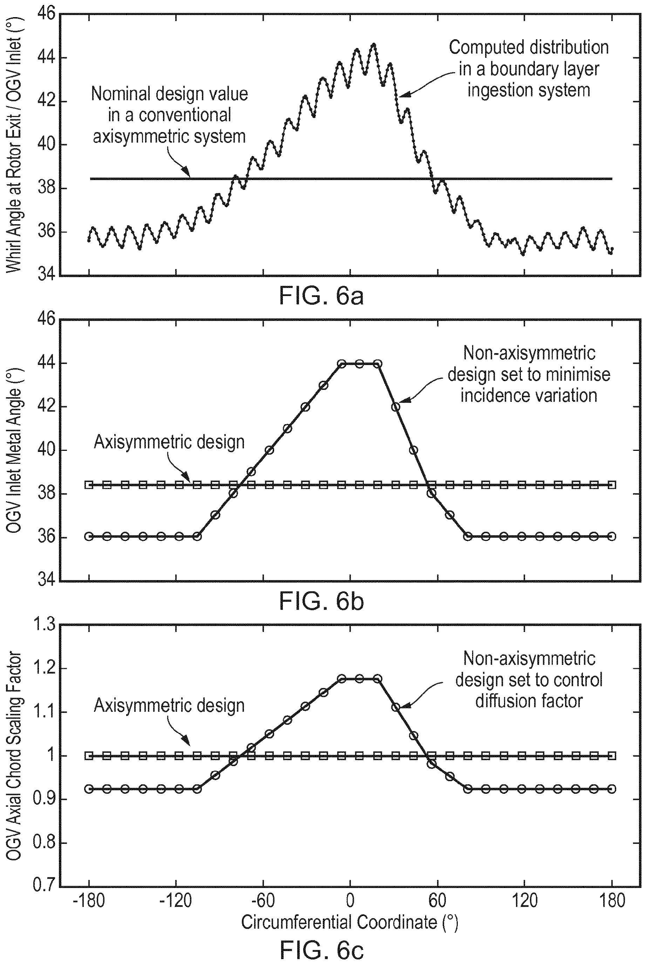

Variations in OGV inlet flow angle and Mach number at all locations around the annulus are extracted from the results. Figure 6a shows an example flow angle distribution taken from a calculation of a boundary layer ingesting fan system where the whirl angle at rotor exit, and hence stator inlet, is plotted against circumferential coordinate. The 0°/360° circumferential position is taken as the bottom of the annulus. In the example this also equates to the maximum whirl angle caused by the boundary layer ingestion. It is possible to select other circumferential starting points; the whirl angle profile may differ to that shown in the case of the duct feeding into the fan having a more complex profile. It can be seen that over part of the annulus the flow angle is greater than the nominal value but elsewhere it is below, leading to both positive and negative OGV incidence relative to the operation in clean flow.

As shown in Figure 6b, at each circumferential and radial location, the inlet metal angle of the OGV is adjusted to reduce the incidence to within the acceptable limits necessary to control the aerodynamic loss. The adjustment is made such that the vane inlet angles are appropriately matched to the computed oncoming flow direction and to minimise incidence variation.

As can be noted it is not necessary for every vane to have a different inlet angle away from the point of maximum boundary layer ingestion disruption the effect achieved by changing the stator inlet metal angle is not significant. Outside these areas, typically +/- 90° and possibly within a narrower band e.g. +/- 60° of the maximum a plurality of similar stators may be used with similar OGV inlet metal angles and / or similar axial chord lengths. This has the beneficial effect of reducing the number of different blades required,

If necessary, the pitch-to-chord ratio of each OGV section is adjusted at each location to maintain diffusion and loading factors within acceptable limits to prevent flow separations. This could be achieved by varying the vane pitch, but the simplest method is to vary the vane axial chord. A non-axisymmetric chord distribution is motivated by the fact that excessive axial chord increases weight and wetted area. The axial chord of the blades is specified by scaling from a nominal axisymmetric value, shown in Fig. 6c. The blade thickness/chord ratio is held constant in this process.

If necessary, the exit metal angles of the most highly loaded OGV sections are relaxed to reduce the required flow turning and further decrease the loading. The allowable relaxation is constrained by the need to avoid passing excessive swirl into the exhaust system, which would reduce the efficiency.

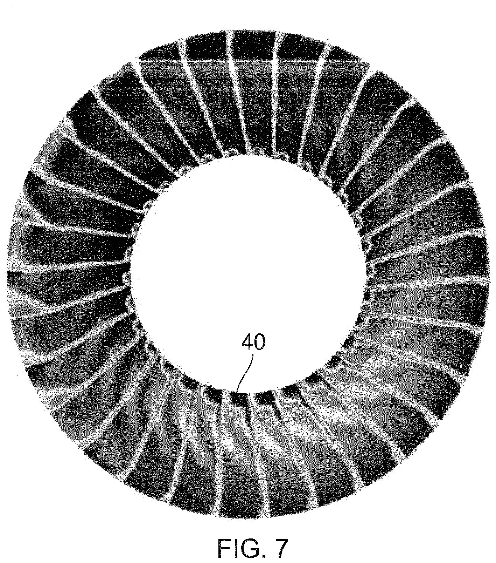

Although this design is successful in reducing the size of some casing separations, within the distorted region, as shown in Figure 7, there is minimal changes to the hub separations 40 that are due to radial flow in this region. The separations are highly 3D in origin and cannot be addressed the above approach and further design change is required.

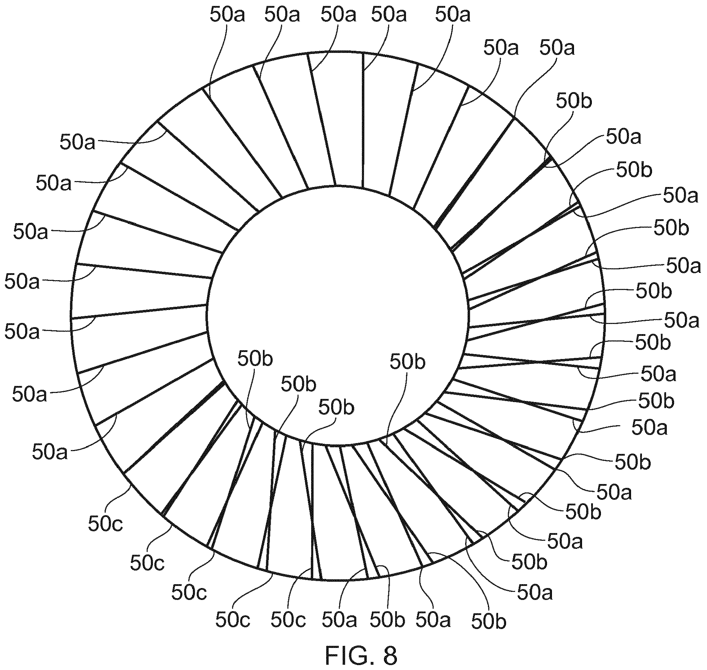

For these highly loaded hub sections of the OGV, changes in blade angles and chord are combined with leaning the pressure side towards the hub. This has been demonstrated to remove some and reduce other three-dimensional flow separations in the hub region when operating within distorted flow. An example lean distribution is shown in Fig. 8. In this case, a lean angle of between 0 and 12 degrees is applied in addition to any lean present in the vane when designed for uniform, axisymmetric flow.

In the figure both conventional, axisymmetric, lean is shown 50a along with, where they differ, the non-axisymmetric lean 50b.

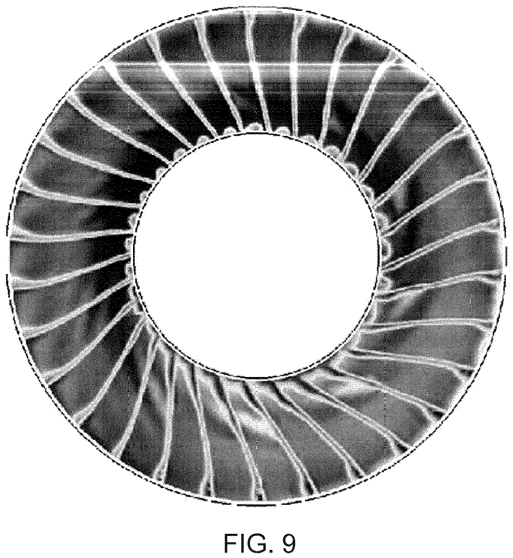

The non-axisymmetric stators have been found to be able to significantly reduce stator casing separations, stator profile losses and hub separations as shown in Figure 9 as well as wake thickness and depth. This allows BLI fan stators to have loss levels comparable with stators operating with clean inflow.

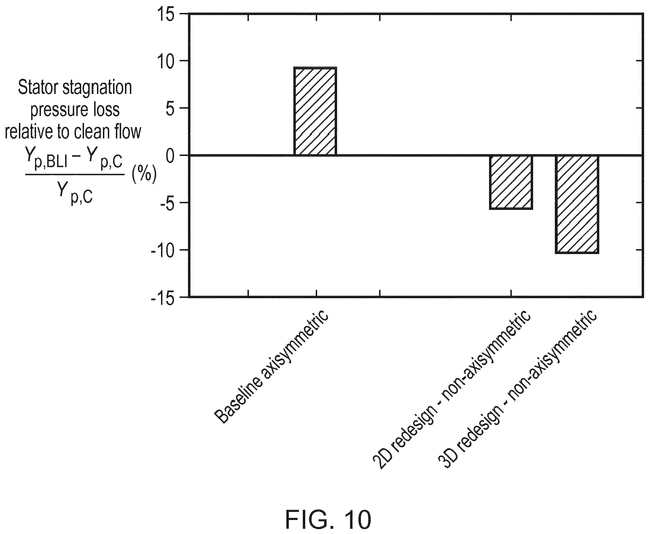

Figure 10 depicts the overall stator loss coefficients where the architecture operates with BLI for axisymmetric and non-axisymmetric designs where both just the metal inlet and camber length are adjusted (2D design) and where the non-axisymmetric lean is applied (3D design). The graph shows that when operating with BLI this particular non-axisymmetic 3D redesign has around 25% lower loss than the baseline axisymmetric design. This reduction in stator loss is equivalent to an increase in stage efficiency of 0.3%.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

The duct in which the rotor and stator is provided may be part of a distributed embedded, or partly embedded, propulsion system with rotors that could be mechanically or electrically driven.

The rotor stage may also be integrated within different parts of the airframe such as, for example, the rear upper surface of the wings and fuselage of a blended wing architecture, the wings of a tube and wing aircraft or the fuselage of a more conventional aircraft; in each case the rotor stage operating with boundary layer ingestion.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

**Claims**

1. A boundary layer ingestion (BLI) rotor stage having an array of upstream rotors (34) and an array of downstream stators (36) arranged around an axis, the rotor stage configured to receive a non-axisymmetric flow field (30), wherein the array of downstream stators has a plurality of aerofoils (42) each having a suction surface, a pressure surface, a leading edge, a trailing edge, a chordal length, the leading edge presenting an inlet metal angle to the non-axisymmetric flow, wherein the array of stators is non-axisymmetric and the plurality of aerofoils have varying inlet metal angles and/or chordal lengths.

2. A BLI rotor stage according to claim 1, wherein the non-axisymmetric flow field presented to the array of stators has a whirl angle that varies around the annulus and wherein the inlet metal angle of each of the plurality of stators increases as the whirl angle increases.

3. A BLI rotor stage according to claim 2, wherein the stator metal angle varies between 25° and 60°.

4. A BLI rotor stage according to claim 3, wherein the stator metal angle varies between 35° and 44°.

5. A BLI rotor stage according to claim 2, claim 3 or claim 4, wherein the inlet metal angles of the stators that are located greater than +/-90° around the annulus from the maximum whirl angle are the same.

6. A BLI rotor stage according to any preceding claim, wherein the chordal length of each stator varies by a scaling factor of between 0.6 and 1.4 from an average chordal length of all the stators.

7. A BLI rotor stage according to claim 6, wherein the chordal length of each stator varies by a scaling factor of between 0.9 and 1.2 from an average chordal length of all the stators.

8. A BLI rotor stage according to claim 6 or claim 7, wherein the non-axisymmetric flow field presented to the array of stators has a whirl angle that varies around the annulus and wherein the chordal length of the stators that are located greater than +/-90° around the annulus from the maximum whirl angle are the same.

9. A BLI rotor stage according to any preceding claim, wherein each of the stators has a lean with the pressure surface of the aerofoil towards the axis.

10. A BLI rotor stage according to claim 9, wherein the angle of lean within the array of stators is non-axisymmetric.

11. A BLI rotor stage according to claim 10, wherein the maximum angle of lean is up to 20° greater than the mode angle of lean.

12. A BLI rotor stage according to any of claims 9 to 11, wherein the lean is straight or compound.

13. A BLI rotor stage according to any preceding claim wherein the non-axisymmetric flow field has at least one distorted region affected by boundary layer ingestion and at least one core stream region.

14. A BLI rotor stage according to any preceding claim within a duct embedded or partially embedded within an aircraft fuselage.

15. A BLI rotor stage according to claim 14, wherein the duct upstream of the rotor stage is convoluted with multiple points of inflection.

FIG. 1

FIG. 2

Inlet BLI profile
from airframe

Reduced velocity non-
uniformity downstream

30    33    34    36

Long length-scale radial/swirling
flow interacting with spinner

Radial redistribution within
rotor blade passages

**FIG. 3**

40

42

46

44

**FIG. 4**

FIG. 5

FIG. 6a

FIG. 6b

FIG. 6c

FIG. 7

FIG. 8

FIG. 9

$$\frac{Y_{p,BLI} - Y_{p,C}}{Y_{p,C}} \ (\%)$$

FIG. 10

Europäisches
Patentamt
European
Patent Office
Office européen
des brevets

# EUROPEAN SEARCH REPORT

Application Number

EP 17 18 6348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 424 467 A2 (GEN ELECTRIC [US]) 2 June 2004 (2004-06-02) * paragraphs [0010], [0011], [0014] - [0017]; figures 2,3 * ----- | 1-15 | INV. F01D5/14 F01D9/04 |
| X | EP 2 522 809 A2 (ROLLS ROYCE PLC [GB]) 14 November 2012 (2012-11-14) * paragraphs [0003], [0005], [0009], [0012], [0024], [0027], [0030] * ----- | 1-15 | |
| X | DE 19 37 395 A1 (DETTMERING PROF DR ING WILHELM) 11 February 1971 (1971-02-11) * pages 3,4; figure 3 * ----- | 1-15 | |

TECHNICAL FIELDS
SEARCHED     (IPC)

F01D

The present search report has been drawn up for all claims

| Place of search | Date of completion of the search | Examiner |
|---|---|---|
| Munich | 3 January 2018 | Chatziapostolou, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 18 6348

This annex lists the patent family members relating to the patent documents cited in  the above-mentioned European search report.
The members are as contained in the European Patent Office EDP file on
The European Patent Office is in no way liable for these particulars which are merely given for the purpose of information.

03-01-2018

| Patent document cited in search report | | Publication date | Patent family member(s) | | Publication date |
|---|---|---|---|---|---|
| EP 1424467 | A2 | 02-06-2004 | CA | 2449263 A1 | 27-05-2004 |
| | | | EP | 1424467 A2 | 02-06-2004 |
| | | | JP | 4366178 B2 | 18-11-2009 |
| | | | JP | 2004176723 A | 24-06-2004 |
| | | | US | 2004101405 A1 | 27-05-2004 |
| EP 2522809 | A2 | 14-11-2012 | EP | 2522809 A2 | 14-11-2012 |
| | | | US | 2012288365 A1 | 15-11-2012 |
| DE 1937395 | A1 | 11-02-1971 | DE | 1937395 A1 | 11-02-1971 |
| | | | FR | 2054402 A5 | 16-04-1971 |

EPO FORM P0459

For more details about this annex : see Official Journal of the European Patent Office, No. 12/82